# EUROPÄISCHE PATENTSCHRIFT

(11) **EP 2 456 187 B1**
(45) Veröffentlichungstag und Bekanntmachung des Hinweises auf die Patenterteilung: **02.01.2019**
(21) Anmeldenummer: 11008252.6
(22) Anmeldetag: 13.10.2011
(51) Int. Cl.: H04M 11/02

(54) **Verfahren zum Einrichten eines aus mindestens einer Türstation und mindestens einer Wohnungsstation zu bildenden Haus-Kommunikationssystems**
Method for setting up a house communication system comprising at least one door station and at least one residence station
Procédé de création d'un système de communication domestique devant être développé à partir d'au moins une station de porte et au moins une station d'habitation

(30) Priorität: 18.11.2010 DE 102010051837
(43) Veröffentlichungstag der Anmeldung: 23.05.2012
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(56) Entgegenhaltungen:
- EP-A2- 1 848 216
- WO-A1-2009/064795
- DE-A1- 10 029 943
- JP-A- 2007 132 009
- US-A1- 2006 280 127

## Beschreibung

Die Erfindung betrifft ein Verfahren zum Einrichten eines aus mindestens einer Türstation und mindestens einer Wohnungsstation zu bildenden Haus-Kommunikationssystems, wobei die Türstation einen oder mehrere Klingelknöpfe entsprechend der Anzahl der Wohnungsstationen aufweist, wobei jede Wohnungsstation eine individuelle Seriennummer, insbesondere einen Barcode aufweist und wobei alle Stationen im installierten Zustand über einen gemeinsamen Bus miteinander zu verbinden sind. Mit dem Begriff "Einrichten" wird die Zuordnung einer jeden Wohnungsstation zu einem speziellen Klingelknopf der Türstation gekennzeichnet.

Moderne Haus-Kommunikationssysteme basieren auf einer Bustopologie. Es existiert keine dedizierte Verbindung zwischen Wohnungsstationen (Innenstellen) und Türstation (Außenstelle) mehr. Durch die Bustopologie ist eine logische Zuordnung der Klingelköpfe der Türstation zu der gewünschten Wohnungsstation unerlässlich.

Es existieren unterschiedliche Verfahren für die Zuordnung von Wohnungsstationen zu einer Türstation im Bereich der Haus-Kommunikationssysteme:
- Zuordnung durch Drücken eines bestimmten Klingelknopfes (Ruftaste) der Türstation und einer zugehörigen Taste der Wohnungsstation.
- Drücken der Klingelknöpfe der Türstation in einer definierten Reihenfolge und Zuordnung der Wohnungsstationen durch Drücken einer Taste bzw. Aktivieren der Wohnungsstationen in derselben Reihenfolge.
- Zuordnung über eine Konfigurationssoftware.

Diese Verfahren setzen eine korrekte Installation / Montage der Wohnungsstationen und Türstationen voraus und ermöglichen keine Vorkonfiguration außerhalb des Hauses vor der Installation.

Aus der EP 1 480 432 B1 ist ein Verfahren zum Einrichten einer Hauskommunikationsanlage mit mehreren Wohnungsstationen, mindestens einer Türstation mit Rufeinrichtungen und einem Bus zum Verbinden der Stationen miteinander bekannt, wobei gemäß einem ersten Schritt die Türstation an den Bus angeschlossen wird, gemäß einem zweiten Schritt eine erste Wohnungsstation an den Bus angeschlossen wird, gemäß einem dritten Schritt die Wohnungsstation auf das Anschließen an den Bus anspricht und ein Anmeldesignal abgibt, gemäß einem vierten Schritt ansprechend auf das Anmeldesignal eine erste Rufadresse sowohl der Wohnungsstation als auch einer ersten Rufeinrichtung zugeordnet wird, gemäß einem fünften Schritt eine weitere Wohnungsstation an den Bus angeschlossen wird und gemäß weiteren Schritten eine Wiederholung der vorstehenden Schritte erfolgt, bis allen Wohnungsstationen eine Rufadresse zugeordnet ist.

Aus der DE 102 53 308 B4 ist ein Verfahren zur Inbetriebnahme einer Hauskommunikationsanlage mit mindestens einer Türstation und einer beliebigen Anzahl von Wohnungsstationen bekannt, wobei alle Stationen über einen gemeinsamen Bus verbunden sind und wobei die Türstation eine Anzahl von den Wohnungsstationen zuzuordnenden Ruftasten aufweist. Zur Programmierung der Zuordnung zwischen den Ruftasten und den Wohnungsstationen ist die Anlage zeitweise in einen Programmiermodus schaltbar. Im Programmiermodus werden zunächst die zu programmierenden Ruftasten der Türstation in einer beliebig gewählten Reihenfolge nacheinander betätigt, wodurch tastenspezifische Adressen entsprechend dieser Reihenfolge separat nacheinander abrufbar in einem Speicher abgelegt werden. Anschließend werden entsprechend der gewünschten Ruftasten-Zuordnung die einzelnen Wohnungsstationen nacheinander in der Reihenfolge der abgelegten Adressen auf die jeweilige Ruftaste programmiert, indem an jeder Wohnungsstation durch Betätigen eines zugehörigen Schaltelementes die entsprechend der abgelegten Reihenfolge jeweils nächste tastenspezifische Adresse aus dem Speicher abgerufen und abgelegt wird.

Eine Türstation einer Klingel- und/oder Türsprech-Anlage mit mehreren Wohnungsstationen und individuell angeordneten Klingeltasten zur Abgabe von Rufsignalen ist aus der DE 10029943 A1 bekannt. Aus der EP 1848216 A2 ist eine Türsprechanlage mit einer Bildübertragungsfunktion von einer Türstation zu einer Videosprechstelle bekannt.

Der Erfindung liegt die Aufgabe zugrunde, ein optimiertes Verfahren zum Einrichten eines aus mindestens einer Türstation und mindestens einer Wohnungsstation zu bildenden Haus-Kommunikationssystems anzugeben.

Diese Aufgabe wird in Verbindung mit den im Oberbegriff angegebenen Merkmalen erfindungsgemäß dadurch gelöst, dass eine auf einem Rechner installierte Konfigurationssoftware für das Einrichten vorgesehen ist und bereits vor der Installation am Einbauort für jede der Wohnungsstationen folgende Schrittfolge abgearbeitet wird:
- in einem ersten Schritt wird die mindestens eine Wohnungsstation mit einer ihren speziellen Einbauort innerhalb des Hauses angebenden Kennzeichnung versehen, um derart dem Installateur vorzugeben, in welcher Wohnung des Hauses diese spezielle Wohnungsstation zu montieren ist,
- in einem zweiten Schritt erfolgt das Einlesen der Seriennummer der Wohnungsstation in die Konfigurationssoftware unter Zuhilfenahme einer Kamera,
- in einem dritten Schritt wird der gekennzeichnete spezielle Einbauort der Wohnungsstation innerhalb des Hauses in die Konfigurationssoftware eingegeben,
- in einem vierten Schritt wird die Zuordnung zwischen der Wohnungsstation und einem bestimmten Klingelknopf der Türstation in die Konfigurationssoftware eingegeben.

Gemäß einer ersten Ausführungsform kann die Konfigurationssoftware auf einem externen Rechner installiert sein, an welchen eine Kamera angeschlossen ist. Als Übertragungsmedium für die auf dem Rechner vorbereitete Konfiguration auf eine Steuer-/Verarbeitungseinheit der Türstation kann eine Speicherkarte herangezogen werden. Alternativ hierzu kann die auf dem Rechner vorbereitete Konfiguration auch über Kabel/ Steckvorrichtungen (z.B. USB-Stecker) oder per Funkssignal oder optische Übertragung auf eine Steuer-/Verarbeitungseinheit der Türstation übertragen werden.

Gemäß einer zweiten Ausführungsform kann die Konfigurationssoftware auch auf einer Steuer-/Verarbeitungseinheit der Türstation selbst installiert sein und dabei kann eine fest eingebaute oder anschließbare Kamera an der Türstation herangezogen werden.

In Weiterbildung der Erfindung kann die im dritten Schritt vorgesehene Kennzeichnung des speziellen Einbauorts der Wohnungsstation innerhalb des Hauses als Bilddatei zu der eingelesenen Seriennummer per Kamera aufgenommen und abgespeichert werden.

Weitere zweckmäßige Ausgestaltungen der Erfindung sind in weiteren Unteransprüchen gekennzeichnet.

Die mit der Erfindung erzielbaren Vorteile liegen insbesondere darin, dass eine Vorkonfiguration außerhalb des Hauses vor der Installation / Montage ermöglicht wird, was insbesondere bei größeren Gebäudekomplexen sehr hilfreich ist, da auf diese Weise die Notwendigkeit entfällt, nach der Installation / Montage eine große Anzahl von Wohnungsstationen zumeist unter Einbezug mehrerer Personen in Betrieb nehmen zu müssen.

Die Erfindung wird nachstehend anhand der in der Zeichnung dargestellten Ausführungsbeispiele erläutert. Es zeigen:
- Fig. 1: eine schematische Anordnung eines Haus-Kommunikationssystems mit einer Türstation und mehreren Wohnungsstationen,
- Fig. 2: ein Beispiel einer durch einen Barcode ausgedrückten Seriennummer einer Wohnungsstation,
- Fig. 3: eine Skizze zur Erläuterung eines ersten Verfahrens zum Einrichten eines Haus-Kommunikationssystems,

- Fig. 4: eine Skizze zur Erläuterung eines zweiten Verfahrens zum Einrichten eines Haus-Kommunikationssystems.

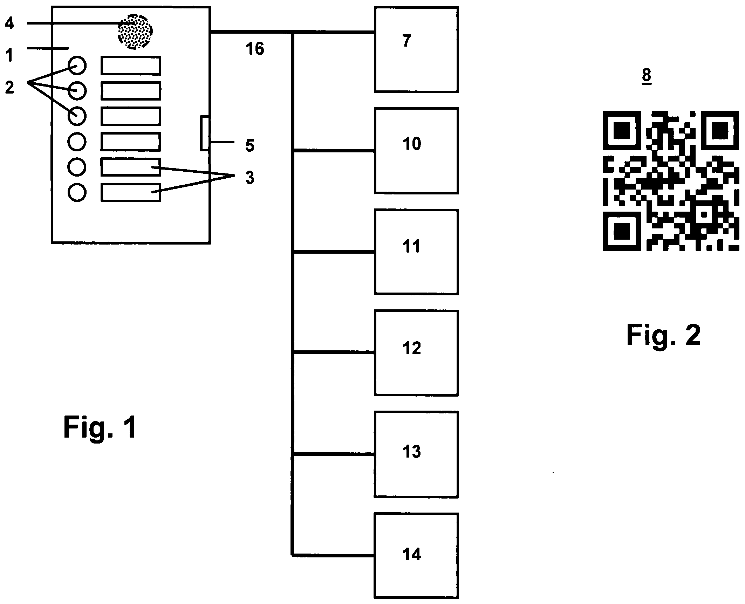

In Fig. 1 ist eine schematische Anordnung eines Haus-Kommunikationssystems mit einer Türstation und mehreren Wohnungsstationen dargestellt. Es ist eine Türstation 1 zu erkennen, welche mit mehreren Wohnungsstationen - im betrachteten Ausführungsbeispiel mit sechs Wohnungsstationen 7, 10, 11, 12, 13, 14 - über einen allen Stationen gemeinsamen Bus 16 verbunden ist. Die Türstation 1 weist einen oder mehrere Klingelknöpfe 2 auf, deren Anzahl der Anzahl der Wohnungsstationen entspricht. Jedem Klingelknopf 2 kann, muss jedoch nicht, ein Namensschild 3 für die Kennzeichnung des Bewohners zugeordnet sein. Optional kann die Türstation 1 eine Kamera 4 und/oder einen Kartenleser/-schreiber 5 besitzen. Des Weiteren respektive alternativ hierzu kann die Türstation einen Anschluss (in Form einer Steckverbindung) für eine Kamera aufweisen.

In Fig. 2 ist ein Beispiel einer durch einen Barcode ausgedrückten Seriennummer 8 einer Wohnungsstation dargestellt. Jede Wohnungsstation erhält eine derartige eindeutige Seriennummer 8, die auf der Wohnungsstation und/oder ihrer Verpackung aufgebracht, insbesondere aufgedruckt oder aufgeklebt ist und ausgelesen werden kann. Für die Zuordnung zu einer eindeutigen Seriennummer eignet sich beispielsweise der Data-Matrix-2D Code. Der in der Figur 2 beispielhaft dargestellte Barcode enthält die Information "BJE DES Barcode SN 0123456789".

Für die Zuordnung zwischen der Türstation 1 und den einzelnen Wohnungsstationen 7, 10 - 14 werden ein erstes nachfolgend näher beschriebenes Verfahren A zum Einrichten und ein zweites nachfolgend näher beschriebenes Verfahren B zum Einrichten vorgeschlagen.

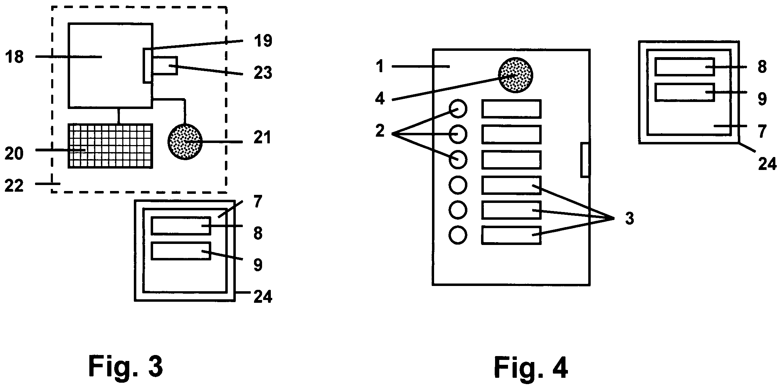

In Fig. 3 ist eine Skizze zur Erläuterung des ersten Verfahrens A zum Einrichten eines Haus-Kommunikationssystems dargestellt. Die Skizze zeigt einen Rechner (PC) 18 mit angeschlossener Tastatur 20 und angeschlossener Kamera 21, wobei der Rechner 18 optional einen Kartenleser/-schreiber 19 für die Aufnahme einer externen Speicherkarte 23 besitzt. Selbstverständlich kann ein handelsübliches Notebook 22 mit eingebauter Kamera 21 für die Anordnung Rechner 18 + optionalem Kartenleser/- schreiber 19 + Tastatur 20 + Kamera 21 verwendet werden. Die Skizze zeigt des Weiteren eine in einer Transportverpackung 24 befindliche Wohnungsstation 7, wobei die auf der Wohnungsstation aufgebrachte Seriennummer 8 durch ein Sichtfenster in der Transportverpackung 24 direkt lesbar ist.

Beim ersten Verfahren A zum Einrichten erfolgt eine "Vorprogrammierung" auf dem Rechner (PC) 18 mit einer Konfigurationssoftware des Rechners über die Kamera 21. Es wird die Seriennummer 8 der Wohnungsstation, insbesondere ausgedrückt durch den Barcode, über die Notebook-Kamera oder über die an den Rechner 18 angeschlossene Kamera 21 ausgelesen und jede Wohnungsstation kann anschließend direkt in der Konfigurationssoftware mit einer eindeutigen Identifikation, z. B. mit dem Namen des Bewohners oder Wohnungsinhabers, verknüpft werden. Über die Konfigurationssoftware wird insbesondere eine Verknüpfung zwischen einer bestimmten Wohnungsstation und einem bestimmten Klingelknopf (Ruftaste) 2 der Türstation 1 vorgenommen.

Nach erfolgter Installation aller Wohnungsstationen 7, 10 - 14 und der Türstation(en) 1 sowie nach erfolgter Übertragung der auf dem Rechner 18 respektive Notebook 22 vorbereiteten Konfiguration auf die Steuer-/Verarbeitungseinheit der Türstation(en) 1 ist dann keine weitere Konfiguration mehr notwendig. Als Übertragungsmedium für die auf dem Rechner 18 vorbereitete Konfiguration auf die Türstation 1 kann beispielsweise die vorstehend erwähnte Speicherkarte 23 herangezogen werden. Die Übertragung kann alternativ unmittelbar über Kabel / Steckvorrichtungen (USB) vom Rechner 18 respektive Notebook 22 zur Türstation 1 oder per Funksignal vom Rechner 18 zur Türstation 1 erfolgen. Vorteilhaft ist jede individuelle Wohnungsstation direkt über ihre individuelle Seriennummer erreichbar / identifizierbar.

Die Schrittfolge (der Programmierablauf) des ersten Verfahrens A zum Einrichten eines Haus-Kommunikationssystems ist dementsprechend beispielsweise wie folgt:
1. Start der Konfigurationssoftware des Rechners 18, insbesondere Notebooks 22.
2. Manuelle Beschriftung der Transportverpackung 24 einer ersten Wohnungsstation 7 mit dem speziellen Einbauort (Aufstellungsort) innerhalb des Hauses, beispielsweise "Erdgeschoß rechts" oder "fünfte Wohneinheit" oder "drittes Stockwerk links" usw. mittels eines Schreibgeräts, z. B. Kugelschreibers. Hierfür wird vorzugsweise unter dem Sichtfenster für die Seriennummer 8 der Wohnungsstation, insbesondere ausgedrückt durch den Barcode, ein Beschriftungsfeld 9 auf der Transportverpackung 24 bereitgestellt. Diese manuelle Beschriftung gibt dem Installateur vor, in welcher Wohnung des Hauses diese spezielle Wohnungsstation zu installieren / montieren ist.
3. Einlesen der Seriennummer 8 der ersten Wohnungsstation 7, insbesondere ausgedrückt durch den Barcode, durch Platzierung der Seriennummer / des Barcodes vor der Kamera 21 respektive Notebook-Kamera in geringem Abstand.
4. Identifikation des Beschriftungsfeldes 9 der Transportverpackung, der den speziellen Einbauort innerhalb des Hauses angibt. Dieses Beschriftungsfeld 9 wird gemäß einer ersten Variante als Bilddatei zu der eingelesenen Seriennummer der Wohnungsstation per Kamera 21 aufgenommen und abgespeichert und dem Installateur in der Konfigurationssoftware angezeigt, um die Zuordnung einer bestimmten Wohnungsstation zur zugeordneten Wohnung zu erleichtern. Gemäß einer alternativen zweiten Variante ist natürlich auch eine manuelle Eingabe des speziellen Einbauortes innerhalb des Hauses über die Tastatur 20 des Rechners 18 respektive Notebooks 22 möglich.
5. Zuordnung der ersten Wohnungsstation 7 zu einem bestimmten Klingelknopf (Ruftaste) 2 der Türstation 1 durch entsprechende Eingabe in der Konfigurationssoftware mit Hilfe der Tastatur 20.
6. Zuordnung der zweiten, dritten, vierten, usw. Wohnungsstation in gleicher Art und Weise, wie vorstehend ab Ziffer 2. beschrieben.

In Fig. 4 ist eine Skizze zur Erläuterung des zweiten Verfahrens B zum Einrichten eines Haus-Kommunikationssystems dargestellt. Die Skizze zeigt eine Türstation 1 mit einer fest eingebauter oder anschließbarer Kamera 4, mit Klingelknöpfen 2 und optional mit Namensschildern 3. Die Skizze zeigt des Weiteren eine in einer Transportverpackung 24 befindliche Wohnungsstation 7, wobei die auf der Wohnungsstation aufgebrachte Seriennummer 8 durch ein Sichtfenster in der Transportverpackung 24 direkt lesbar ist.

Beim zweiten Verfahren B zum Einrichten eines Haus-Kommunikationssystems erfolgt eine unmittelbare Programmierung / Inbetriebnahme der Türstation 1, welche eine fest eingebaute oder anschließbare Kamera 4 aufweist. Beim Verfahren B zum Einrichten kann deshalb die Steuer-/Verarbeitungseinheit der Türstation 1 selbst benutzt werden, um die mindestens eine Wohnungsstation 7, 10 - 14 zuzuordnen. Die Steuer-/Verarbeitungseinheit der Türstation 1 wird in einen Programmiermodus geschaltet und die Seriennummern 8 der Wohnungsstationen, insbesondere ausgedrückt durch die Barcodes, werden von der Kamera 4 gelesen und können anschließend direkt mit einem bestimmten Klingelknopf (Ruftaste) 2 der Türstation 1 verknüpft werden.

Dieses zweite Verfahren B zeichnet sich besonders dadurch aus, dass die Einrichtung ohne weitere Geräte, wie Rechner, Notebook, usw. durchzuführen ist. Besonders vorteilhaft ist, dass die Einrichtung sehr einfach vor Ort, auch bei bereits eingebauter Türstation, erfolgen kann.

Die Schrittfolge (der Programmierablauf) des Verfahrens B zum Einrichten eines Haus-Kommunikationssystems ist dementsprechend beispielsweise wie folgt:
1. Aktivierung des Programmiermodus der Steuer-/Verarbeitungseinheit in der Türstation 1.
2. Manuelle Beschriftung der Transportverpackung 24 der ersten Wohnungsstation 7 mit dem speziellen Einbauort innerhalb des Hauses, beispielsweise "Erdgeschoß rechts" oder "fünfte Wohneinheit" oder "drittes Stockwerk links" usw. mittels eines Schreibgerätes, z. B. eines Kugelschreibers. Hierfür wird vorzugsweise unter dem Sichtfenster für die Seriennummer 8 der Wohnungsstation, insbesondere ausgedrückt durch den Barcode, ein Beschriftungsfeld 9 auf der Transportverpackung 24 bereitgestellt. Diese manuelle Beschriftung gibt dem Installateur vor, in welcher Wohnung des Hauses diese Wohnungsstation zu montieren ist.
3. Einlesen der Seriennummer 8 der ersten Wohnungsstation 7, insbesondere ausgedrückt durch den Barcode, durch Platzierung der Seriennummer / des Barcodes vor der Kamera 4 in geringem Abstand.
4. Bei erkannter Seriennummer 8, insbesondere ausgedrückt durch den Barcode, erfolgt vorzugsweise eine optische oder akustische Signalisierung in der Türstation 1, ausgelöst durch die Steuer-/Verarbeitungseinheit.
5. Drücken des der ersten Wohnungsstation 7 zuzuordnenden Klingelknopfes (Ruftaste) 2 der Türstation 1.
6. Daraufhin erfolgt vorzugsweise eine optische oder akustische Signalisierung in der Türstation 1, ausgelöst durch die Steuer-/Verarbeitungseinheit.
7. Zuordnung der zweiten, dritten, vierten, usw. Wohnungsstation in gleicher Art und Weise, wie vorstehend ab Ziffer 2. beschrieben.

Die vorstehend erläuterte manuelle Beschriftung der Transportverpackungen 24 der Wohnungsstationen hat in Verbindung mit den Sichtfenstern der Transportverpackungen 24 zum Lesen der Seriennummer 8 den Vorteil, dass ein Auspacken der Wohnungsstationen zum Zwecke der Konfiguration nicht erforderlich ist. Abweichend hiervon ist es selbstverständlich auch möglich, die Wohnungsstationen zum Zwecke der Konfiguration auszupacken und unmittelbar manuell zu beschriften respektive mit einer den speziellen Einbauort innerhalb des Hauses angebenden Kennzeichnung zu versehen.

Sowohl beim Verfahren A zum Einrichten als auch beim Verfahren B zum Einrichten ist für die Einrichtung / Programmierung / Inbetriebnahme vorteilhaft weder eine manuelle Eingabe von Nummern notwendig, noch eine aufwendige Inbetriebnahme der Wohnungsstationen nach erfolgter Installation / Montage unter Mitwirkung von mehreren Personen. Damit wird die Einrichtung / Programmierung / Inbetriebnahme insgesamt deutlich vereinfacht.

### Bezugszeichenliste

- 1: Türstation
- 2: Klingelknopf / Klingelknöpfe
- 3: Namensschilder der Bewohner
- 4: Kamera der Türstation
- 5: Kartenleser/-schreiber
- 6: -
- 7: Wohnungsstation
- 8: Seriennummer, insbesondere Barcode
- 9: Beschriftungsfeld
- 10: Wohnungsstation
- 11: Wohnungsstation
- 12: Wohnungsstation
- 13: Wohnungsstation
- 14: Wohnungsstation
- 15: -
- 16: Bus
- 17: -
- 18: Rechner
- 19: Kartenleser/-schreiber
- 20: Tastatur
- 21: Kamera
- 22: Notebook
- 23: Speicherkarte
- 24: Transportverpackung

## Patentansprüche

1. Verfahren zum Einrichten eines aus mindestens einer Türstation (1) und mindestens einer Wohnungsstation (7, 10 - 14) zu bildenden Haus-Kommunikationssystems, wobei die Türstation (1) einen oder mehrere Klingelknöpfe (2) entsprechend der Anzahl der Wohnungsstationen (7, 10 - 14) aufweist, wobei jede Wohnungsstation (7, 10 - 14) eine individuelle Seriennummer (8) aufweist und wobei alle Stationen (1, 7, 10 - 14) im installierten Zustand über einen gemeinsamen Bus (16) miteinander zu verbinden sind, **dadurch gekennzeichnet, dass** eine auf einem Rechner installierte Konfigurationssoftware für das Einrichten vorgesehen ist und bereits vor der Installation am Einbauort für jede der Wohnungsstationen (7, 10 - 14) folgende Schrittfolge abgearbeitet wird:
• in einem ersten Schritt werden die Wohnungsstationen (7, 10 - 14) mit einer ihren speziellen Einbauort innerhalb des Hauses angebenden Kennzeichnung versehen, um dem Installateur vorzugeben, in welcher Wohnung des Hauses eine spezielle Wohnungsstation (7, 10 - 14) zu montieren ist,
• in einem zweiten Schritt erfolgt das Einlesen der Seriennummer (8) der Wohnungsstation (7, 10 - 14) in die Konfigurationssoftware unter Zuhilfenahme einer Kamera (4, 21),
• in einem dritten Schritt wird der gekennzeichnete spezielle Einbauort der Wohnungsstation (7, 10 - 14) innerhalb des Hauses in die Konfigurationssoftware eingegeben,
• in einem vierten Schritt wird die Zuordnung zwischen der Wohnungsstation (7, 10 - 14) und einem bestimmten Klingelknopf (2) der Türstation (1) in die Konfigurationssoftware eingegeben.

2. Verfahren nach Anspruch 1, **dadurch gekennzeichnet, dass** die Konfigurationssoftware auf einem externen Rechner (18) installiert ist, an weichen eine Kamera (21) angeschlossen ist.

3. Verfahren nach Anspruch 2, **dadurch gekennzeichnet, dass** als Übertragungsmedium für die auf dem Rechner (18) vorbereitete Konfiguration auf eine Steuer-/Verarbeitungseinheit der Türstation (1) eine Speicherkarte (23) herangezogen wird.

4. Verfahren nach Anspruch 2, **dadurch gekennzeichnet, dass** die auf dem Rechner (18) vorbereitete Konfiguration über Kabel / Steckvorrichtungen oder per Funkssignal oder optische Übertragung auf eine Steuer-/Verarbeitungseinheit der Türstation (1) übertragen wird.

5. Verfahren nach Anspruch 1, **dadurch gekennzeichnet, dass** die Konfigurationssoftware auf einer Steuer-/Verarbeitungseinheit der Türstation (1) installiert ist und eine fest eingebaute oder anschließbare Kamera (4) an der Türstation (1) herangezogen wird.

6. Verfahren nach einem der vorstehenden Ansprüche, **dadurch gekennzeichnet, dass** die im dritten Schritt vorgesehene Kennzeichnung des speziellen Einbauorts der Wohnungsstation (7, 10 - 14) innerhalb des Hauses als Bilddatei zu der eingelesenen Seriennummer (8) per Kamera (4, 21) aufgenommen und abgespeichert wird.

7. Verfahren nach einem der vorstehenden Ansprüche, **dadurch gekennzeichnet, dass** sich jede der Wohnungsstationen während der Konfiguration in einer individuellen Transportverpackung (24) befindet und der erste Schritt in Form einer manuellen Beschriftung der Transportverpackung (24) erfolgt.

8. Verfahren nach Anspruch 6, **dadurch gekennzeichnet, dass** die Transportverpackung (24) ein Sichtfenster aufweist, durch welche die Seriennummer (8) lesbar ist.

## Claims

1. Method for setting up a building communication system to be formed from at least one door station (1) and at least one residence station (7, 10-14), wherein the door station (1) has one or more bell buttons (2) corresponding to the number of residence stations (7, 10-14), wherein each residence station (7, 10-14) has an individual serial number (8), and wherein all stations (1, 7, 10-14) are to be connected to one another via a common bus (16) in the installed state, **characterized in that** configuration software installed on a computer is provided for the setting-up process and the following sequence of steps is executed for each of the residence stations (7, 10-14) even before installation at the installation location:
• in a first step, the residence stations (7, 10-14) are provided with an identification which indicates its specific installation location within the building in order to specify to the installer that residence of the building in which a specific residence station (7, 10-14) should be installed,
• in a second step, the serial number (8) of the residence station (7, 10-14) is read into the configuration software with the aid of a camera (4, 21),
• in a third step, the identified specific installation location of the residence station (7, 10-14) within the building is input to the configuration software,
• in a fourth step, the assignment between the residence station (7, 10-14) and a particular bell button (2) of the door station (1) is input to the configuration software.

2. Method according to Claim 1, **characterized in that** the configuration software is installed on an external computer (18) to which a camera (21) is connected.

3. Method according to Claim 2, **characterized in that** a memory card (23) is used as the medium for transmitting the configuration prepared on the computer (18) to a control/processing unit of the door station (1).

4. Method according to Claim 2, **characterized in that** the configuration prepared on the computer (18) is transmitted to a control/processing unit of the door station (1) via cables/plug devices or by radio signal or optical transmission.

5. Method according to Claim 1, **characterized in that** configuration software is installed on a control/processing unit of the door station (1) and a permanently installed or connectable camera (4) is used at the door station (1).

6. Method according to one of the preceding claims, **characterized in that** the identification of the specific installation location of the residence station (7, 10-14) within the building, as provided in the third step, is recorded by camera (4, 21) as an image file for the serial number (8) which has been read in and is stored.

7. Method according to one of the preceding claims, **characterized in that** each of the residence stations is in individual transport packaging (24) during configuration and the first step is carried out in the form of manual labelling of the transport packaging (24).

8. Method according to Claim 6, **characterized in that** the transport packaging (24) has a viewing window through which the serial number (8) can be read.

## Revendications

1. Procédé pour la mise en place d'un système de communication domestique devant être développé à partir d'au moins une station de porte (1) et d'au moins une station d'habitation (7, 10 - 14), dans lequel la station de porte (1) comporte un ou plusieurs boutons poussoirs de sonnerie (2) correspondant au nombre de stations d'habitation (7, 10 - 14), dans lequel chaque station d'habitation (7, 10 - 14) possède un numéro de série individuel (8) et dans lequel toutes les stations (1, 7, 10 - 14) doivent, à l'état installé, être reliées entre elles par l'intermédiaire d'un bus commun (16), **caractérisé en ce qu'**il est prévu un logiciel de configuration installé sur un ordinateur pour effectuer la mise en place et **en ce que** la séquence d'étapes suivante est exécutée pour chacune des stations d'habitation (7, 10 - 14) dès avant l'installation sur le lieu de montage :
• lors d'une première étape, les stations d'habitation (7, 10 - 14) sont dotées d'une identification indiquant leur lieu d'installation particulier à l'intérieur de l'habitation afin d'indiquer à l'installateur dans quelle pièce de l'habitation doit être installée une station d'habitation (7, 10 - 14) particulière,
• lors d'une deuxième étape, le numéro de série (8) de la station d'habitation (7, 10 - 14) est lu dans le logiciel de configuration à l'aide d'une caméra (4, 21),
• lors d'une troisième étape, le lieu d'installation particulier identifié de la station d'habitation (7, 10 - 14) à l'intérieur de l'habitation est saisi dans le logiciel de configuration,
• lors d'une quatrième étape, l'association entre la station d'habitation (7, 10 - 14) et un bouton poussoir de sonnerie (2) déterminé de la station de porte (1) est enregistrée dans le logiciel de configuration.

2. Procédé selon la revendication 1, **caractérisé en ce que** le logiciel de configuration est installé sur un ordinateur externe (18) auquel est raccordée une caméra (21) .

3. Procédé selon la revendication 2, **caractérisé en ce qu'**une carte mémoire (23) est utilisée en tant que support de transmission pour la configuration préparée sur l'ordinateur (18) sur une unité de commande/traitement de la station de porte (1).

4. Procédé selon la revendication 2, **caractérisé en ce que** la configuration préparée sur l'ordinateur (18) est transmise à une unité de commande/traitement de la station de porte (1) par l'intermédiaire de dispositifs à câbles ou à fiches ou par transmission radio ou optique.

5. Procédé selon la revendication 1, **caractérisé en ce que** le logiciel de configuration est installé sur une unité de commande/traitement de la station de porte (1) et **en ce qu'**une caméra (4) installée ou pouvant être raccordée de manière fixe est utilisée sur la station de porte (1).

6. Procédé selon l'une des revendications précédentes, **caractérisé en ce que** l'identification, fournie lors de la troisième étape, du lieu d'installation particulier de la station d'habitation (7, 10 - 14) dans l'habitation est acquise et enregistrée par caméra (4, 21) sous la forme d'un fichier image pour le numéro de série (8) lu.

7. Procédé selon l'une des revendications précédentes, **caractérisé en ce que** chacune des stations d'habitation se trouve dans un emballage de transport individuel (24) pendant la configuration et **en ce que** la première étape est exécutée sous la forme d'un étiquetage manuel de l'emballage de transport (24).

8. Procédé selon la revendication 6, **caractérisé en ce que** l'emballage de transport (24) comporte une fenêtre de visualisation à travers laquelle le numéro de série (8) peut être lu.
